# EUROPÄISCHE PATENTSCHRIFT

(11) **EP 1 126 982 B1**
(45) Veröffentlichungstag und Bekanntmachung des Hinweises auf die Patenterteilung: **14.05.2003**
(21) Anmeldenummer: 99971766.3
(22) Anmeldetag: 28.10.1999
(51) Int. Cl.: B60B 3/16, F16B 43/00

(54) **KOMBINIERTES BEFESTIGUNGSELEMENT**
COMBINED FIXING DEVICE
ELEMENT DE FIXATION COMBINE

(30) Priorität: 05.11.1998 DE 29819782 U
(43) Veröffentlichungstag der Anmeldung: 29.08.2001
(73) Patentinhaber: Altenloh, Brinck & Co. GmbH & Co. KG, D-58256 Ennepetal (DE)
(72) Erfinder: HOFSCHNEIDER, Manfred, D-42349 Wuppertal (DE)
(74) Vertreter: Patentanwälte Dr. Solf & Zapf
(86) Internationale Anmeldenummer: EP9908174
(87) Internationale Veröffentlichungsnummer: WO00027653

(56) Entgegenhaltungen:
- EP-A- 0 131 739
- DE-A- 2 749 534
- DE-A- 3 042 139
- DE-U- 29 614 320
- US-A- 2 192 322
- US-A- 5 308 285

## Beschreibung

Die Erfindung betrifft ein kombiniertes Befestigungselement mit einem Kopf zur Drehmomentaufbringung und mit einem ein Gewinde aufweisenden Schaft, wobei an einem am Schaft befindlichen Rand, dessen Außendurchmesser größer ist als der Durchmesser des Schaftes, eine Scheibe über mindestens eine in ihrer Ringöffnung befindliche Verengung verdrehbar gehalten ist, wobei der Durchmesser der Verengung kleiner als der Außendurchmesser des Randes, aber größer als der Durchmesser des Schaftes ist und wobei die Scheibe im Bereich des Durchmessers der Verengung derart elastisch aufweitbar ist und der Rand und die Scheibe derart geometrisch aufeinander abgestimmt gestaltet sind, daß die Scheibe mit der Verengung vom freien Ende des Schaftes her über den Rand geführt, jedoch gegensinnig nicht zurückbewegt werden kann, wobei die Scheibe über ihre Höhe in der Ringöffnung zumindest drei unterschiedliche Durchmesserabschnitte aufweist.

Entsprechend dem deutschen Gebrauchsmuster DE 297 04 820 U1 ist eine Radschraube bzw. eine Radmutter als kombiniertes Element zur Befestigung von Kraftfahrzeugrädern unter Schutz gestellt, wobei die Radschraube in an sich vorbekannter Weise einen Mutternteil (Kopfteil), einen Außengewindeschaftteil und einen dazwischen befindlichen Konusteil aufweist und eine Radfelge durchgreifend in eine Gewindebohrung einer Radnabe oder -scheibe einschraubbar ist. Die Radmutter weist in an sich vorbekannter Weise ein Innengewinde, das sich in ihrem Kopfteil erstreckt und ein Konusteil auf und ist auf einen Außengewindeschaftteil eines eine Radfelge durchgreifenden Radbolzens einer Radnabe oder -scheibe aufschraubbar. Um Räder mit gleichem Lochkreis an Radflanschen mit unterschiedlichen Lochkreisen befestigen zu können, sieht das Gebrauchsmuster vor, daß der Konusteil eine separate Konusscheibe ist, die auf die Radschraube oder den Radbolzen bzw. die Radmutter aufsteckbar ist und eine Durchgangsbohrung aufweist, deren Durchmesser größer ist als der Außendurchmesser des Gewindeschaftteils der Radschraube oder des Radbolzens bzw. des Schaftes der Radmutter. Die separate Konusscheibe stellt nachteiligerweise ein verlierbares Teil dar.

Ein ähnliches, als Radschraube ausgebildetes Befestigungselement, bei dem jedoch Kopf/Schaft einerseits und Scheibe andererseits unverlierbar miteinander verbindbar sind, ist aus dem deutschen Gebrauchsmuster DE 296 14 320 U1 bekannt. Diese bekannte Radschraube besitzt den Vorteil, daß die Scheibe (dort als Stützring bezeichnet) in einfacher Weise unverlierbar auf dem Schaft gehalten ist und, insbesondere, wenn sich der Stützring im Anlagebereich des Fahrzeugrades kugelförmig verjüngt, eine definierte Befestigung des Fahrzeugrades an der Fahrzeugnabe gewährleistet. Die Verengung in der Ringöffnung wird bei dieser Radschraube durch mindestens eine Verstemmung gebildet, die vorzugsweise aus vier Nasen bestehen kann. Der umlaufende Rand begrenzt eine umlaufende Ringnut. Entsprechend der beschriebenen Ausführung liegen die Spitzen der Nasen auf einem Innendurchmesser, der etwa dem Durchmesser des Schaftes entspricht. Bei dieser Radschraube ist nachteilig, daß das Gewinde auf dem Schaft erst nach dem Einlegen des Stützrings in die Ringnut gefertigt werden kann.

Ein kombiniertes Befestigungselement der eingangs beschriebenen Art ist aus der DE 30 42 139 A1 bekannt, die eine Befestigungsanordnung beschreibt, welche aus einem Gewindebolzen und einer gewölbten Unterlegscheibe besteht. Das Gewinde des Bolzens endet in einem vorgegebenen Abstand unterhalb des Gewindebolzenkopfes, wobei der hierdurch gebildete gewindefreie Bereich zur Aufnahme der Unterlegscheibe dient und einen ringförmigen Rand enthält. Der Durchmesser des Loches der Unterlegscheibe ist größer als der Spitzendurchmesser des Bolzengewindes aber kleiner als der Durchmesser des ringförmigen Randes, und der Innenumfang des Loches weist eine geringere Dicke auf als der übrige Teil der Unterlegscheibe, um dem Innenumfang eine Flexibilität zu verleihen, die ein Hinüberschieben der Unterlegscheibe über den ringförmigen Rand in den gewindefreien Raum und damit eine unverlierbare Festlegung am Gewindebolzen erlaubt. Auch die Patentschrift US 5 308 285 beschreibt ein gattungsgemäßes kombiniertes Befestigungselement.

Der Erfindung liegt die Aufgabe zugrunde, ein kombiniertes Befestigungselement der eingangs beschriebenen Art bei Wahrung des Vorteils der Möglichkeit der unverlierbaren Halterung der Scheibe am Schaft und einfacher Herstellbarkeit in montagetechnisch optimierter Form auszubilden.

Die Aufgabe der Erfindung wird durch die Merkmale des Anspruchs 1 gelöst.

Der Schaft kann zum Verbinden mit Scheibe mit Vorteil zunächst in die Ringöffnung der Scheibe eingeführt werden, ohne daß es zu einer Pressung mit der Verengung kommt. Ist der Schraubenkörper aber bis zu einer bestimmten Tiefe in die Scheibe eingeführt, kommt es zu einer Pressung zwischen dem am Schaft befindlichen Rand und der Verengung. Beispielsweise durch eine kurzzeitige (schlagartige) erhöhte Krafteinwirkung auf den Kopf der Schraube in axialer Richtung (bei festgelegter Scheibe) kann dann die Verengung elastisch aufgeweitet werden, wobei der Rand die Verengung aufspreizt, so daß er diese passieren kann. Damit ist das erfindungsgemäße Befestigungselement vormontiert und die Scheibe verdrehbar auf dem Schaft gehalten. Dadurch, daß sich die Verengung elastisch zurückdeformiert und der Rand und die Scheibe derart geometrisch aufeinander abgestimmt gestaltet sind, daß die Scheibe nicht zurückbewegt werden kann, ist eine unverlierbare Halterung der Scheibe am Schaft gewährleistet. Der Rand bildet einen ohne erheblichen Kraftaufwand nicht überwindbaren Anschlag für die Scheibe, so daß das erfindungsgemäße Befgestigungselement vorteilhafterweise in dieser vormontierten Form sowohl ausgeliefert als auch zur Montage verwendet werden kann.

Dadurch, daß die Scheibe über ihre Höhe in der Ringöffnung zumindest drei unterschiedliche Durchmesserabschnitte aufweist, die aus einem ersten Abschnitt mit durchmesserkonstantem Wandungsverlauf, in dem der Innendurchmesser größer ist als der Außendurchmesser des Randes, einem zweiten, sich in Richtung auf die Verengung hin verjüngenden, insbesondere konisch zulaufenden Abschnitt, der sich an den ersten Abschnitt in axialer Richtung anschließt, und dem (dritten) Abschnitt der Verengung bestehen, in dem der Durchmesser geringfügig kleiner ist, als der Außendurchmesser des Randes, erfolgt bei der Montage der Übergang zum durchmesserreduzierten Bereich der Verengung nicht sprunghaft, sondern vorteilhafterweise kontinuierlich. Dadurch wird die Vormontage der Scheibe am Schaft erleichtert.

Ein Vorteil des erfindungsgemäßen Befestigungselementes besteht auch darin, daß sein Gewinde, sich als Außengewinde auf einem Gewindeabschnitt an einem freien Ende des Schaftes befindet, vor der Montage der Scheibe auf den Schaft gefertigt, vornehmlich aufgewalzt, werden kann. Die Scheibe ist dann zwischen dem Kopf und dem Gewindeabschnitt am Schaft gehalten, wobei der Durchmesser der Verengung größer ist als der Außendurchmesser des Gewindeabschnittes.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine perspektivische Darstellung eines erfindungsgemäßen kombinierten Befestigungselementes,
- Fig. 2: das erfindungsgemäße Befestigungselement gemäß Fig. 1 in vergrößerter Darstellung und in einem axialen Halbschnitt,
- Fig. 3: eine in Fig. 2 mit III gekennzeichnete, weiter vergrößerte Einzelheit des erfindungsgemäßen Befestigungselementes.

In den verschiedenen Figuren der Zeichnung sind dieselben Teile auch mit denselben Bezugszeichen versehen, so daß sie in der Regel auch jeweils nur einmal beschrieben werden.

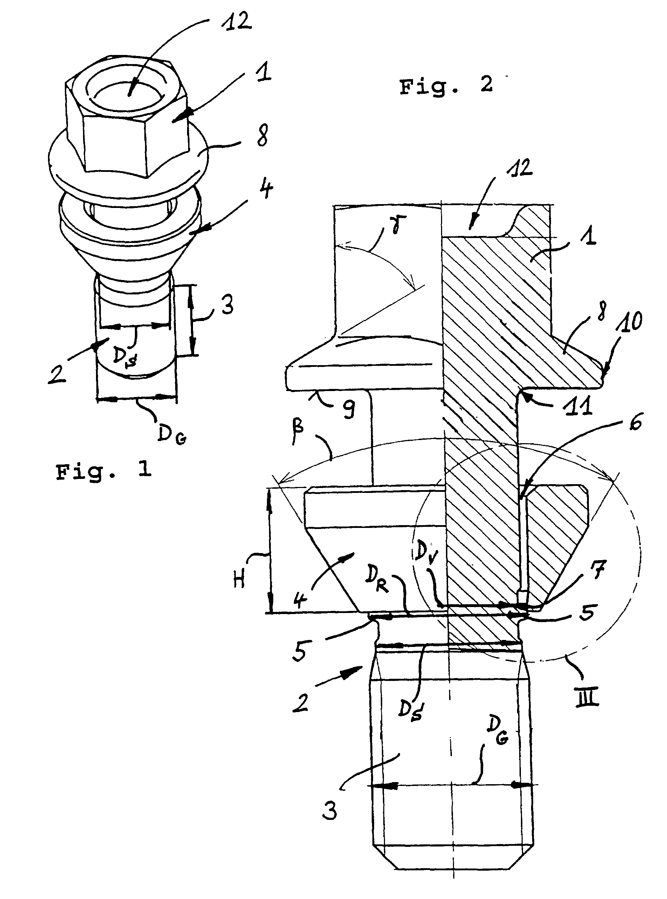

Wie die persektivische Darstellung in Fig. 1 zeigt, weist ein erfindungsgemäßes Befestigungselement einen Kopf 1 zur Drehmomentaufbringung und einen Schaft 2 auf, der wiederum an seinem freien Ende einen Gewindeabschnitt 3 aufweist. Zwischen dem Kopf 1 und dem Gewindeabschnitt 3 ist eine Scheibe 4 verdrehbar gehalten. Das Gewinde des Gewindeabschnittes 3 kann vornehmlich ein aufgewalztes Gewinde sein, wobei der Durchmesser D_{G} des Gewindeabschnittes 3 größer als der Durchmesser D_{S} des Schaftes 2 ist. Das Gewinde des Gewindeabschnittes 3 kann mit Vorteil gefertigt werden, bevor die Scheibe 4 mit dem aus Kopf 1 und Schaft 2 bestehenden Körper verbunden wird.

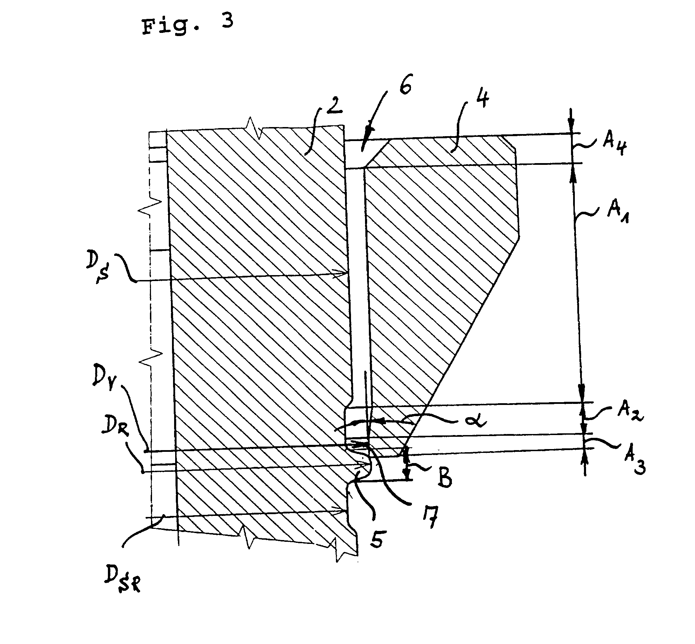

Fig. 2 und 3 veranschaulichen weitere Details des erfindungsgemäßen Befestigungselementes. Wie Fig. 2 zeigt, ist die Scheibe 4 zwischen dem Kopf 1 und dem Gewindeabschnitt 3 an einem am Schaft 2 befindlichen Rand 5 gehalten, dessen Außendurchmesser D_{R} größer ist als der Durchmesser D_{S} des Schaftes 2. Die verdrehbare Halterung erfolgt über mindestens eine in der Ringöffnung 6 der Scheibe 4 befindliche Verengung 7, wobei der Durchmesser D_{V} der Verengung kleiner ist, als der Außendurchmesser D_{R} des Randes 5. Weiterhin ist der Durchmesser D_{V} der Verengung 7 sowohl größer als der Durchmesser D_{S} des Schaftes 2 als auch als der Außendurchmesser D_{G} des Gewindeabschnittes 4. Die Scheibe 4 ist jedoch im Bereich des Durchmessers D_{V} der Verengung 7 elastisch aufweitbar. Der Rand 5 und die Scheibe 4 sind außerdem derart geometrisch aufeinander abgestimmt gestaltet, daß die Scheibe 4 mit der Verengung 7 vom freien Ende des Schaftes 2 her über den Rand 5 geführt, jedoch gegensinnig nicht zurückbewegt werden kann. In der Gegenrichtung bildet der Rand 5 für die Scheibe 4 ein ohne erheblichen Kraftaufwand nicht überwindbares Hindernis.

Im Hinblick auf die Montierbarkeit ist die elastische Aufweitbarkeit der Scheibe 4 bedeutsam, die beispielsweise beim Einsatz eines vergüteten (gehärteten und angelassenen) Vergütungsstahles als Werkstoff gegeben ist. Die Scheibe 4 kann aber auch aus einem Leichtmetallwerkstoff, wie Aluminium oder dessen Legierungen, bestehen, wobei neben der elastischen Verformung auch ein plastischer Verformungsanteil zugelassen werden kann. Der Körper des Befestigungselementes kann mit Vorteil aus Stahl bestehen.

Der Rand 5 kann, wie Fig. 2 und 3 veranschaulichen, insbesondere durch eine im Querschnitt sich nach außen verjüngende und im äußeren Bereich etwa halbkreisförmige umlaufende Wulst gebildet sein. Eine solche Form des Randes 5 begünstigt eine optimale, kontinuierlich verlaufende und zerstörungsfreie Aufweitung der Verengung 7 beim Einführen des Schaftes in die Ringöffnung 6.

Wie Fig. 3 des weiteren zeigt, kann die Scheibe 4 über ihre Höhe H in der Ringöffnung 6 zumindest drei unterschiedliche Durchmesserabschnitte aufweisen, und zwar einen ersten Abschnitt A₁ mit durchmesserkonstantem Wandungsverlauf, in dem der Innendurchmesser größer ist als der Außendurchmesser D_{R} des Randes 5, einen zweiten, sich in Richtung auf die Verengung 7 hin verjüngenden, insbesondere konisch zulaufenden Abschnitt A₂, der sich an den ersten Abschnitt A₁ in axialer Richtung anschließt, und den sich weiter in axialer Richtung anschließenden Abschnitt A₃ der Verengung 7, in dem der Durchmesser D_{V} geringfügig kleiner ist, als der Außendurchmesser D_{R} des Randes 5.

Der konisch zulaufende zweite Abschnitt A₂ bildet dabei einen Übergangsbereich. In seinem größeren Durchmesserbereich kann mit Vorteil eine Spielpassung und in seinem verringerten Durchmesserbereich eine Preßpassung mit dem Außendurchmesser D_{R} des Randes 5 vorliegen, wenn dieser sich an der entsprechenden Stelle befindet.

Im Sinne einer optimalen ("sanften") Aufweitung der Verengung 7 durch den Rand 5 kann der konisch auf die Verengung 7 zulaufende zweite Abschnitt A₂ um einen Winkel α vom durchmesserkonstanten geradlinigen Wandungsverlauf des ersten Abschnitts A₂ abweichen, der nicht größer ist als 20°, vorzugsweise nicht größer als 10°.

Damit eine Rückbewegung der Verengung 7 über den Rand 5 wirksam unterbunden ist, hat es sich als vorteilhaft erwiesen, wenn die axiale Länge (Abschnitt A₃) der Verengung 7 zumindest geringfügig kleiner ist als eine mittlere Breitenabmessung B des Randes 5. Zu diesem Zweck kann die umlaufende Wulst auch oberseitig (auf ihrer dem Kopf 1 zugewandten Seite) in Abweichung zu der oben beschriebenen Form eben ausgebildet sein, so daß im vormontierten Zustand ein flächiger Anschlag der Scheibe 4 am Rand 5 erfolgt.

Wie die Zeichnungsfiguren zeigen, verjüngt sich die Scheibe 4 insbesondere im Anlagebereich, z.B. eines Fahrzeugrades d.h. zum freien Ende des Schaftes 2 hin. Dadurch ist eine definierte Befestigung des Fahrzeugrades an einer Fahrzeugnabe gewährleistet. Die Verjüngung kann durch einen konischen Öffnungswinkel β (Fig. 2) beschrieben werden, der vorteilhafterweise im Bereich von 50° bis 70° liegen kann.

In dazu komplementärer Weise kann der Kopf 1 in seinem unteren Bereich einen krempenartigen, sich zumindest abschnittsweise im Außendurchmesser konisch aufweitenden Vorsprung 8 mit einer unterseitigen, gegenüber dem Querschnitt im oberen Bereich des Kopfes 1 vergrößerten Anlagefläche 9 für die Scheibe 4 aufweisen, wobei der Vorsprung 8 im Bereich seines größten Umfangs 10 ballig ausgebildet ist. Die Aufweitung kann durch einen Winkel γ zum im Querschnitt geradlinigen Verlauf der Wand des Kopfes 1 (Fig. 2) beschrieben werden, der vorteilhafterweise ebenfalls im Bereich von 50° bis 70° liegen kann.

Zur Erleichterung des Einführens des Schaftes 2 in die Ringöffnung 6 der Scheibe 4 kann die Scheibe 4 auf ihrer dem Kopf 1 zugewandten Seite einen sich nach dieser Seite hin konisch aufweitenden (vierten) Innendurchmesser-Abschnitt A₄ aufweisen (Bezugszeichen - Fig. 3).

Der Übergangsbereich 11 von der Anlagefläche 9 des Kopfes 1 zum Schaft 2 kann verrundet ausgebildet sein. Diese Verrundung kann im montierten Zustand der erfindungsgemäßen Befestigungselement mit Vorteil in dem sich konisch aufweitenden Innendurchmesser-Abschnitt A₄ der Scheibe 4 zu liegen kommen.

Die Erfindung ist nicht auf die beschriebenen Ausführungsbeispiele beschränkt, sondern umfaßt auch alle im Sinne der Erfindung gleichwirkenden Ausführungen. So kann der Rand 5 umfangsgemäß bereichsweise von Abschnitten eines verringerten Durchmessers unterbrochen sein. Er wird in diesem Fall nicht von einer umlaufenden Wulst, sondern nur von mehreren, beipielsweise drei, um jeweils etwa 120° gegeneinander versetzten, Wulstabschnitten gebildet.

Es können außerdem auch weitere zweckmäßige technische Maßnahmen, z.B. zum Schutz gegen Beschädigungen, vorgesehen sein. So können sowohl der Kopf 1 und Schaft 2 der erfindungsgemäßen Befestigungselement als auch die Scheibe 4 an ihrer Oberfläche mit einer korrosionsmindernden (auch tribotechnisch wirksamen und farbgebenden), insbesondere zinkund/oder nickelhaltigen Schutzschicht überzogen sein. Es kann sich dabei mit Vorteil auch um ein Mehrschicht-System handeln. Der Durchmesser des Schaftes D_{S} muß nicht über den gesamten Schaft 2 konstant sein: Z.B. ist der Schaftdurchmesser D_{SR} beidseitig des Randes 5, wie Fig. 3 zeigt, geringfügig kleiner als im übrigen Bereich. Fig. 1 und 2 der Zeichnung zeigen auch, daß der Kopf 1 oberseitig eine Napfung 12 aufweist, die auf anwenderseitigen Wunsch vorgesehen und bemessen sein kann.

## Patentansprüche

1. Kombiniertes Befestigungselement mit einem Kopf (1) zur Drehmomentaufbringung und mit einem Schaft (2) der am freien Ende einen Gewinde abschnitt (3) aufweist, wobei an einem am Schaft (2) befindlichen Rand (5), dessen Außendurchmesser (D_{R}) größer ist als der Durchmesser (D_{S}) des Schaftes (2), eine Scheibe (4) über mindestens eine in ihrer Ringöffnung (6) befindliche Verengung (7) verdrehbar gehalten ist, wobei der Durchmesser (D_{V}) der Verengung (7) kleiner als der Außendurchmesser (D_{R}) des Randes (5), aber sowohl größer als der Durchmesser (D_{S}) des Schaftes (2) als auch der Aussendurchmesser (D_{G}) des Gewindeabschnittes (3) ist und wobei die Scheibe (4) im Bereich des Durchmessers (D_{V}) der Verengung (7) derart elastisch aufweitbar ist und der Rand (5) und die Scheibe (4) derart geometrisch aufeinander abgestimmt gestaltet sind, daß die Scheibe (4) mit der Verengung (7) vom freien Ende des Schaftes (2) her über den Rand (5) geführt, jedoch gegensinnig nicht zurückbewegt werden kann, wobei die Scheibe (4) über ihre Höhe (H) in der Ringöffnung (6) zumindest drei unterschiedliche Durchmesserabschnitte (A₁, A₂, A₃) aufweist,
**dadurch gekennzeichnet, daß** ein erster Abschnitt (A₁) einen durchmesserkonstantem Wandungsverlauf aufweist, in dem der Innendurchmesser größer ist als der Außendurchmesser (D_{R}) des Randes (5), wobei sich in axialer Richtung an den ersten Abschnitt (A₁) ein zweiter Abschnitt (A₂) anschließt, der sich in Richtung auf die Verengung (7) hin verjüngt und wobei sich in axialer Richtung an den zweiten Abschnitt (A₂) ein dritter, die Verengung (7) bildender Abschnitt (A₃) anschließt, in dem der Durchmesser (D_{V}) geringfügig kleiner ist, als der Außendurchmesser (D_{R}) des Randes (5).

2. Befestigungselement nach Anspruch 1,
**dadurch gekennzeichnet, daß** der Rand (5) durch eine im Querschnitt sich nach außen verjüngende und im äußeren Bereich etwa halbkreisförmige umlaufende Wulst gebildet ist.

3. Befestigungselement nach Anspruch 1 oder 2,
**dadurch gekennzeichnet, daß** sich das Gewinde als Außengewinde auf einem Gewindeabschnitt (3) an einem freien Ende des Schaftes (2) befindet, wobei die Scheibe (4) zwischen dem Kopf (1) und dem Gewindeabschnitt (3) am Schaft (2) gehalten ist und wobei der Durchmesser (D_{V}) der Verengung (7) größer ist als der Außendurchmesser (D_{G}) des Gewindeabschnittes (3).

4. Befestigungselement nach einem der Ansprüche 1 bis 3,
**dadurch gekennzeichnet, daß** in einem größeren Durchmesserbereich des zweiten Abschnitts (A₂) eine Spielpassung und in einem verringerten Durchmesserbereich des zweiten Abschnitts (A₂) eine Preßpassung mit dem Außendurchmesser (A_{R}) des Randes (5) vorliegt.

5. Befestigungselement nach einem der Ansprüche 1 bis 4,
**dadurch gekennzeichnet, daß** der sich verjüngend, insbesondere konisch, auf die Verengung (7) zulaufende zweite Abschnitt (A₂) um einen Winkel (α) vom durchmesserkonstanten geradlinigen Wandungsverlauf des ersten Abschnitts (A₁) abweicht, der nicht größer ist als 20°, vorzugsweise nicht größer als 10°.

6. Befestigungselement nach einem der Ansprüche 1 bis 5,
**dadurch gekennzeichnet**, eine axiale Länge (Abschnitt A₃) der Verengung (7) zumindest geringfügig kleiner ist als eine mittlere Breitenabmessung (B) des Randes (5).

7. Befestigungselement nach einem der Ansprüche 1 bis 6,
**dadurch gekennzeichnet, daß** sich die Scheibe (4) in Richtung auf das freie Ende des Schaftes (2) hin verjüngt.

8. Befestigungselement nach einem der Ansprüche 1 bis 7,
**dadurch gekennzeichnet, daß** die Scheibe (4) auf ihrer dem Kopf (1) zugewandten Seite einen sich nach dieser Seite hin konisch aufweitenden Innendurchmesser-Abschnitt (A₄) aufweist.

9. Befestigungselement nach einem der Ansprüche 1 bis 8,
**dadurch gekennzeichnet, daß** das Gewinde des Gewindeabschnittes (3) ein Walzgewinde ist.

10. Befestigungselement nach einem der Ansprüche 1 bis 9,
**dadurch gekennzeichnet, daß** die Scheibe (4) aus einem gehärteten und angelassenen Vergütungsstahl, oder aus einem Leichtmetallwerkstoff, wie Aluminium oder dessen Legierungen, besteht.

11. Befestigungselement nach einem der Ansprüche 1 bis 10,
**dadurch gekennzeichnet, daß** sowohl der Schraubkörper (Kopf 1 un Schaft 2) als auch die Scheibe (4) an ihrer Oberfläche mit einer korrosionsmindernden zinkhaltigen Schutzschicht, insbesondere mit einer Mehrfach-Beschichtung, überzogen sind.

12. Befestigungselement nach einem der Ansprüche 1 bis 11,
**dadurch gekennzeichnet, daß** der Kopf (1) in seinem unteren Bereich einen krempenartigen, sich zumindest abschnittsweise im Außendurchmesser konisch aufweitenden Vorsprung (8) mit einer unterseitigen, gegenüber dem Querschnitt im oberen Bereich des Kopfes (1) vergrößerten Anlagefläche (9) für die Scheibe (4) aufweist, wobei der Vorsprung (8) im größten Umfangsbereich (10) ballig ausgebildet ist.

13. Befestigungselement nach einem der Ansprüche 1 bis 12,
**dadurch gekennzeichnet, daß** der Übergangsbereich (11) vom Kopf (1) zum Schaft (2) verrundet ausgebildet ist.

14. Befestigungselement nach einem der Ansprüche 1 bis 13,
**dadurch gekennzeichnet, daß** der Kopf (1) oberseitig eine Napfung (12) aufweist.

15. Befestigungselement nach einem der Ansprüche 1 bis 14,
**dadurch gekennzeichnet, daß** der Rand (5) umfangsgemäß bereichsweise von Abschnitten eines verringerten Durchmessers unterbrochen ist.

## Claims

1. Combined fastening element with a head (1) for applying torques and with a shank (2) which has a threaded section (3) at the free end, it being the case that on a border (5), which is located on the shank (2) and of which the external diameter (D_{R}) is greater than the diameter (D_{S}) of the shank (2), a washer (4) is retained in a rotatable manner via at least one constriction (7) located in its annular opening (6), that the diameter (D_{V}) of the constriction (7) is smaller than the external diameter (D_{R}) of the border (5), but is greater than both the diameter (D_{S}) of the shank (2) and the external diameter (D_{G}) of the threaded section (3), and that the washer (4) can be widened elastically in the region of the diameter (D_{V}) of the constriction (7), and the border (5) and the washer (4) are co-ordinated geometrically with one another, such that the washer (4) is guided over the border (5), by way of the constriction (7), from the free end of the shank (2), but cannot be moved back-in the opposite direction, the washer (4) having at least three different diameter sections (A₁, A₂, A₃) over its height (H) in the annular opening (6), **characterized in that** a first section (A₁) has a constant-diameter wall profile, in which the internal diameter is greater than the external diameter (D_{R}) of the border (5), the first section (A₁) being adjoined in the axial direction by a second section (A₂), which tapers in the direction of the constriction (7), and the second section (A₂) being adjoined in the axial direction by a third section (A₃), which forms the constriction (7) and in which the diameter (D_{V}) is slightly smaller than the external diameter (D_{R}) of the border (5).

2. Fastening element according to Claim 1, **characterized in that** the border (5) is formed by an encircling bead which tapers outwards in cross section and is approximately semicircular in the outer region.

3. Fastening element according to Claim 1 or 2, **characterized in that** the thread is located as an external thread on a threaded section (3) at a free end of the shank (2), the washer (4) being retained on the shank (2) between the head (1) and the threaded section (3), and the diameter (D_{V}) of the constriction (7) being greater than the external diameter (D_{G}) of the threaded section (3).

4. Fastening element according to one of Claims 1 to 3, **characterized in that**, in a larger diameter region of the second section (A₂), a loose fit is provided in relation to the external diameter (A_{R}) of the border (5) and, in a reduced diameter region of the second section (A₂), a press fit is provided in relation to the external diameter (D_{R}) of the border (5).

5. Fastening element according to one of Claims 1 to 4, **characterized in that** the second section (A₂), which tapers, in particular conically, in the direction of the constriction (7), deviates from the constant-diameter rectilinear wall profile of the first section (A₁) by an angle (α) which is no greater than 20°, preferably no greater than 10°.

6. Fastening element according to one of Claims 1 to 5, **characterized in that** an axial length (section A₃) of the constriction (7) is at least slightly smaller than an average width dimension (B) of the border (5).

7. Fastening element according to one of Claims 1 to 6, **characterized in that** the washer (4) tapers in the direction of the free end of the shank (2).

8. Fastening element according to one of Claims 1 to 7, **characterized in that**, on its side which is directed towards the head (1), the washer (4) has an internal-diameter section (A₄) which widens conically in the direction of this side.

9. Fastening element according to one of Claims 1 to 8, **characterized in that** the thread of the threaded section (3) is a rolled thread.

10. Fastening element according to one of Claims 1 to 9, **characterized in that** the washer (4) consists of a hardened and tempered steel or of a light-metal material, such as aluminium or the alloys thereof.

11. Fastening element according to one of Claims 1 to 10, **characterized in that** both the screw-connection body (head 1 and shank 2) and the washer (4) are surface-coated with a corrosion-reducing zinc-containing protective layer, in particular with a multilayered coating.

12. Fastening element according to one of Claims 1 to 11, **characterized in that** the head (1), in its bottom region, has a rim-like protrusion (8) which widens conically, at least in certain sections, in external diameter and, on the underside, has an abutment surface (9) which is larger than the cross section in the top region of the head (1) and is intended for the washer (4), the protrusion (8) being convex in the largest circumference region (10).

13. Fastening element according to one of Claims 1 to 12, **characterized in that** the transition region (11) from the head (1) to the shank (2) is rounded.

14. Fastening element according to one of Claims 1 to 13, **characterized in that** the head (1) has a cup-like formation (12) on the top side.

15. Fastening element according to one of Claims 1 to 14, **characterized in that** the border (5) is interrupted circumferentially, at least in certain regions, by sections of a reduced diameter.

## Revendications

1. Elément de fixation combiné avec une tête (1) pour l'application d'un couple de rotation, ainsi qu'avec une tige (2) qui présente à l'extrémité libre une section filetée (3), du type selon lequel, une rondelle (4), située à un rebord annulaire (5) de la tige (2), le rebord de diamètre extérieur (D_{R}) étant supérieur au diamètre (D_{S}) de la tige (2), est maintenue avec rotation possible par au moins un rétrécissement (7) de l'ouverture annulaire intérieur (6), le diamètre extérieur (D_{V}) dudit rétrécissement (7) étant plus petit que le diamètre extérieur (D_{R}) dudit rebord annulaire (5) mais également plus grand que le diamètre (D_{S}) de la tige (2), mais aussi plus grand que le diamètre extérieur (D_{G}) de la section filetée (3), du type selon lequel, la rondelle (4) est extensible de façon élastique dans la zone du diamètre (D_{V}) du rétrécissement de section (7), du type selon lequel, les conformations géométriques du rebord annulaire (5) et de la rondelle (4) assurent leur raccordement en superposition, de sorte que ladite rondelle (4), avec son rétrécissement de section (7), puisse être engagée et guidée, depuis l'extrémité libre de ladite tige (2), jusqu'au-delà du rebord annulaire (5), sans toutefois être susceptible de déplacement en sens inverse, et du type selon lequel; la rondelle (4) présente sur sa hauteur (H) au moins trois sections différentes de diamètre (A₁, A₂, A₃) dans l'ouverture annulaire (6), **caractérisé en ce qu'**une première section (A1) présente une continuité constante de diamètre dans laquelle son diamètre intérieur est supérieur au diamètre extérieur (D_{R}) du rebord annulaire (5), une deuxième section (A₂) se raccorde dans le sens axial à la première section (A₁) et diminue, en diamètre, en direction du rétrécissement de section (7), une troisième section (A₃) formant le rétrécissement de section (7) se raccorde dans le sens axial à la deuxième section (A₂), le diamètre (D_{V}) de cette troisième section (A₃) étant légèrement inférieur au diamètre extérieur du rebord annulaire (5).

2. Elément de fixation selon la revendication 1, **caractérisé en ce que** le rebord annulaire (5) est formé par un renflement qui diminue en coupe transversale vers l'extérieur et qui présente un contour externe sensiblement semi-circulaire.

3. Elément de fixation selon la revendication 1 ou 2, **caractérisé en ce que** le filetage mâle en tant que filet extérieur se trouve sur une section filetée (3), à l'extrémité libre de la tige (2), ladite rondelle (4) étant maintenue entre la tête (1) et la section filetée (3) à la tige (2), le diamètre (D_{V}) du rétrécissement de section (7) étant supérieur au diamètre extérieur (D_{G}) de la section filetée (3).

4. Elément de fixation selon l'une des revendications 1 à 3, **caractérisé en ce que**, dans une zone plus large du diamètre de la seconde section (A₂), un ajustement avec jeu est prévu, tandis qu'un ajustement sans jeu avec le diamètre extérieur (A_{R}) du rebord annulaire (5) est prévu dans une zone plus étroite du diamètre de ladite seconde section (A₂).

5. Elément de fixation selon l'une des revendications 1 à 4, **caractérisé en ce que** la seconde section (A₂) qui aboutit vers le rétrécissement de section (7) selon un profil particulièrement conique, est distante, selon un angle (α), du profil de paroi, à diamètre constant, de la première section (A₁), ledit angle étant inférieur ou égal à 20° et de préférence non supérieur à 10°.

6. Elément de fixation selon l'une des revendications 1 à 5, **caractérisé en ce qu'**une longueur axiale (section A₃) du rétrécissement de section (7) est au moins légèrement inférieure à une mesure moyenne de la largeur (B) du rebord annulaire (5).

7. Elément de fixation selon l'une des revendications 1 à 6, **caractérisé en ce que** la section de la rondelle (4) diminue en direction de l'extrémité libre de la fige (2).

8. Elément de fixation selon l'une des revendications 1 à 7, **caractérisé en ce que** la rondelle (4) présente, dans sa partie dirigée vers la tête (1), une section de diamètre intérieur (A₄) qui va en s'élargissant de façon conique vers ladite tête (1).

9. Elément de fixation selon l'une des revendications 1 à 8, **caractérisé en ce que** le filetage de la section filetée (3) est un filet roulé.

10. Elément de fixation selon l'une des revendications 1 à 9, **caractérisé en ce que** la rondelle (4) se compose d'un acier de traitement trempé et revenu ou d'un composé de métal léger comme l'aluminium ou ses alliages.

11. Elément de fixation selon l'une des revendications 1 à 10, **caractérisé en ce que** le corps de la vis (tête 1 et tige 2) ainsi que la rondelle (4) sont revêtus sur leur surface d'une couche protectrice zinguée anti-corrosion et en particulier d'un revêtement multicouches.

12. Elément de fixation selon l'une des revendications 1 à 11, **caractérisé en ce que** la tête (1) présente à son niveau inférieur une protubérance ou renflement (8) qui s'évase, selon un profil conique, au moins en partie dans son périmètre extérieur, avec une face de référence inférieure (9) pour la rondelle (4), présentant un agrandissement par rapport à la coupe transversale de la partie supérieure de la tête (1), tandis que la zone périphérique (10) de ladite protubérance (8) a un profil bombé ou convexe.

13. Elément de fixation selon l'une des revendications 1 à 12, **caractérisé en ce que** la zone de transition (11) depuis la tête (1) vers la tige (2) présente un profil arrondi.

14. Elément de fixation selon l'une des revendications 1 à 13, **caractérisé en ce que** la tête présente sur son côté supérieur une cuvette (12).

15. Elément de fixation selon l'une des revendications 1 à 14, **caractérisé en ce que** le rebord annulaire (5) présente de façon discontinue des sections d'un diamètre réduit
